# EUROPEAN PATENT APPLICATION

(11) **EP 2 320 112 A1**
(43) Date of publication of application: **11.05.2011**
(21) Application number: 09175178.4
(22) Date of filing: 05.11.2009
(51) Int. Cl.: F16J 15/02, F16J 15/10, F16B 39/24, F16B 43/00, F16L 23/18, F16L 23/20

(54) **Washer**

(71) Applicant: Lin, Chang Hui, Siushui Hsiang, Chang hua 50446 (TW)
(72) Inventor: Lin, Chang Hui, Siushui Hsiang, Chang hua 50446 (TW)
(74) Representative: Beck & Rössig European Patent Attorneys

(57) **Abstract**

A washer (1) includes a bore (11) formed in an annular member (10), and one or more openings (12) formed in the annular member (10) for suitably decreasing the weight of the washer (1) and for facilitating the contact and engagement between the washer (1) and the other parts or elements for allowing the washer (1) to be suitably and snugly or solidly engaged between the various parts or elements, the openings (12) of the washer (1) includes a shape selected from an oblong shape, a circular shape, a square shape, a pentagon shape, a hexagon shape, or a rhombus shape.

## Description

The invention relates to a light weight washer or gasket including a decreased weight.

Typical washers or gaskets comprise a solid annular ring made of asbestos materials, graphite materials, metal materials, Teflon materials, rubber materials, porcelain materials for being engaged between parts or elements.

However, the typical solid washers or gaskets are heavy and include a planar structure that may not be snugly engaged between the parts or elements.

The technical problem of the present invention is to provide a washer or gasket having a decreased weight for facilitating the engagement between the washer and the parts or elements.

This problem is solved by a washer comprising the features of claim 1.

Advantageous embodiments are laid down in further claims.

In the drawings
FIG. 1 is a plan view of a washer or gasket; and
FIGS. 2, 3, 4, 5, 6 are other plan views illustrating the other washers or gaskets.

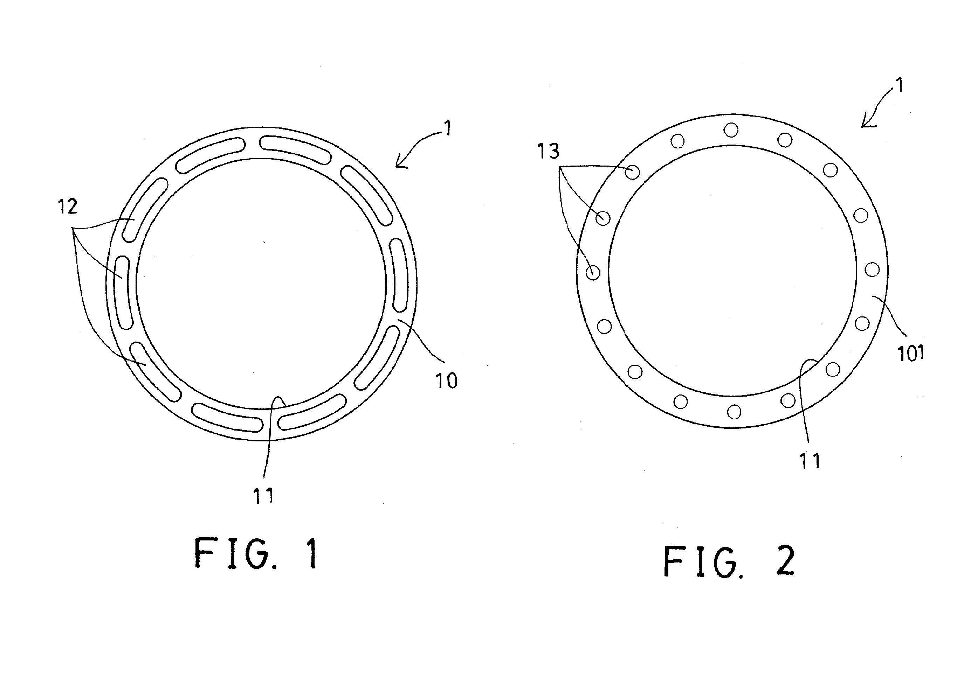

Referring to FIG. 1, a washer 1 comprises an annular member 10 including a bore 11, and one or more openings 12 formed in the annular member 10 for decreasing the weight of the washer 1 and for facilitating the contact and engagement between the washer 1 and the other parts or elements (not shown). It is to be noted that the formation or provision of the openings 12 in the annular member 10 may increase the friction between the washer 1 and the other parts or elements for allowing the washer 1 to be suitably and snugly or solidly engaged between the various parts or elements.

Each washer 1 may have two substantially parallel surfaces on either side of the annular member 10 while the thickness of the washer 1 between said surfaces preferably is substantially smaller than the radial width of the annular member 10. The openings 12 extend between said surfaces and may be are arranged equidistanly around the preferably central bore 11. Preferably, the radial width of the openings 12 is smaller than the radial width of the annular member 10 with a ratio of more than 0 to preferably less than 0.9, and more preferably less than 0.7. In the shown embodiments the radial width of the annular member 10 to the maximum width of the central bore 11 is in a range of 0.05 to 0.30, more specifically 0.12 to 0.20, but may also be larger or smaller. The annular member 10 is shown to be circular but may also have a different shape, e.g. a polygonal shape.

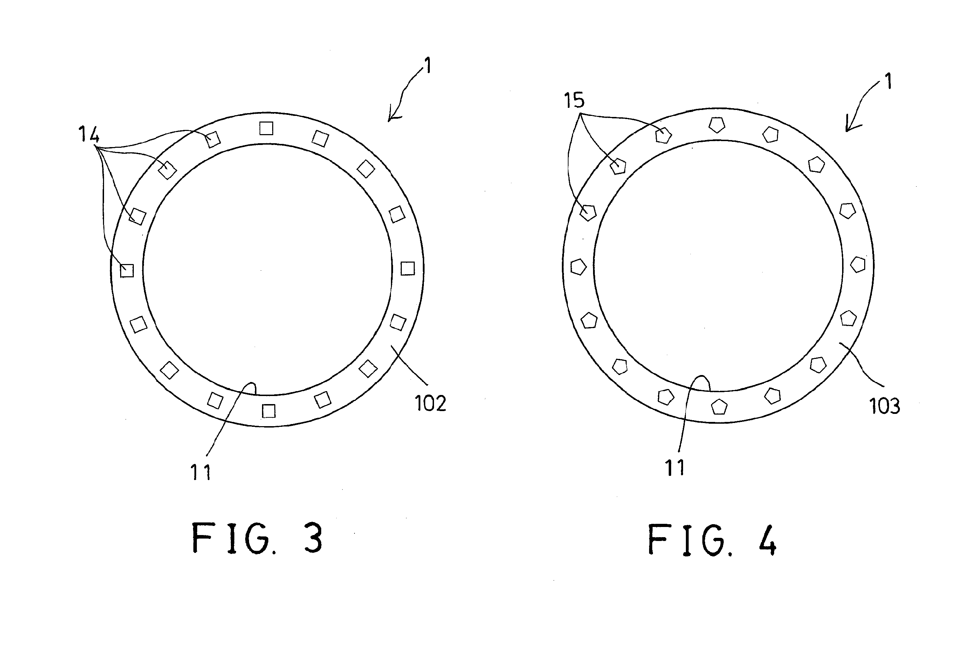

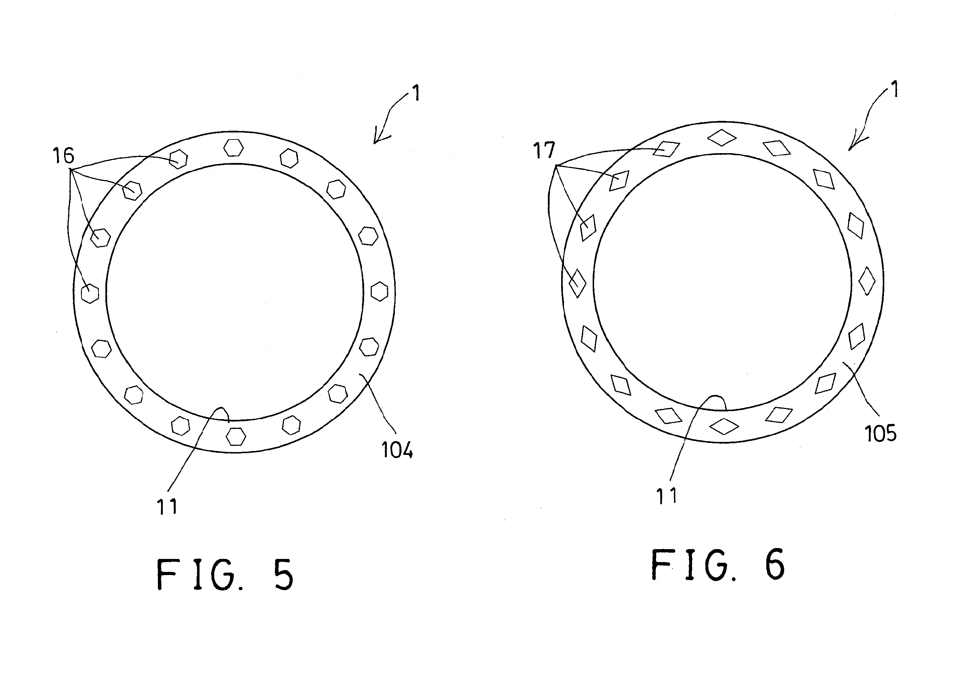

As also shown in FIG. 1, the openings 12 in the annular member 10 of the washer 1 may be formed into various shapes or contours or structures, such as oblong shaped openings 12 formed in the annular member 10 as shown in FIG. 1, circular shaped openings 13 formed in the annular member 101 as shown in FIG. 2, square shaped openings 14 formed in the annular member 102 as shown in FIG. 3, pentagonal shaped openings 15 formed in the annular member 103 as shown in FIG. 4, hexagonal shaped openings 16 formed in the annular member 104 as shown in FIG. 5, or rhomboid shaped openings 17 formed in the annular member 105 as shown in FIG. 6.

In operation, the formation or provision of the openings 12-17 in the annular members 10, 101-105 may suitably decrease the weight of the washer 1 and may increase the friction between the washer 1 and the other parts or elements for allowing the washer 1 to be suitably and snugly or solidly engaged between the various parts or elements.

The gaskets or washers 1 may be made of various materials, such as asbestos materials, graphite materials, metal materials, Teflon materials, rubber materials, porcelain materials, or the like.

## Claims

1. A washer (1; 101; 102; 103; 104; 105) comprising an annular member (10) including a bore (11): **characterized in that**:
the annular member (10) includes at least one opening (12; 13; 14; 15; 16; 17) formed in the annular member (10).

2. The washer (101) as claimed in claim 1, **characterised in that** the opening (13) of the washer (101) has a a circular shape.

3. The washer (102; 103; 104; 105) as claimed in claim 1, **characterised in that** the opening (14; 15; 16; 17) of the washer (102; 103; 104; 105) has a polygonal shape.

4. The washer (1) as claimed in claim 1, **characterised in that** the opening (12) of the washer (1) has an oblong shape.

5. The washer (102; 103; 104; 105) as claimed in claim 1, **characterised in that** the opening (14; 15; 16; 17) of the washer (102; 103; 104; 105) has a square shape, a pentagon shape, a hexagon shape, or a rhombus shape.

6. The washer (1; 101; 102; 103; 104; 105) as claimed in one of claims 1 to 5, **characterised in that** it is made of an asbestos material.

7. The washer (1; 101; 102; 103; 104; 105) as claimed in one of claims 1 to 5, **characterised in that** it is made of an graphite material.

8. The washer (1; 101; 102; 103; 104; 105) as claimed in one of claims 1 to 5, **characterised in that** it is made of a Teflon material.

9. The washer (1; 101; 102; 103; 104; 105) as claimed in one of claims 1 to 5, **characterised in that** it is made of a porcelain material.

10. The washer (1; 101; 102; 103; 104; 105) as claimed in one of claims 1 to 5, **characterised in that** it is made of a synthetic resin or rubber material.

11. The washer (1; 101; 102; 103; 104; 105) as claimed in one of claims 1 to 5, **characterised in that** it is made of a metal material.
